# EUROPÄISCHE PATENTANMELDUNG

(11) **EP 1 224 851 A2**
(43) Veröffentlichungstag der Anmeldung: **24.07.2002**
(21) Anmeldenummer: 02000421.4
(22) Anmeldetag: 08.01.2002
(51) Int. Cl.: A01C 1/06

(54) **Saatgut mit einer Stickstoff-Dünger enthaltenden Umhüllung**

(30) Priorität: 19.01.2001 DE 10102555
(71) Anmelder: SUET Saat- und Erntetechnik GmbH, D-37269 Eschwege (DE)
(72) Erfinder: Weber, Heinrich, Dr.rer.nat., Dipl.Agr., 37242 Bad Sooden-Allendorf (DE); Jungwirth, Karl, Dipl.Ing., 37284 Waldkappel (DE); Hörner, Ernst-Ludwig, Dipl.Chem.Ing., 37269 Eschwege (DE)
(74) Vertreter: Freiherr von Schorlemer, Reinfried, Dipl.-Phys.

(57) **Zusammenfassung**

Die Erfindung betrifft Saatgut mit einer Stickstoff-Dünger enthaltenden Umhüllung. Der Stickstoff-Dünger enthält eine schnell wirkende, für die Jugendentwicklung des Saatguts bestimmte Komponente und eine langsam wirkende, zur Bildung eines Stickstoffdepots bestimmte Komponente. Das Gewichtsverhältnis der beiden Komponenten ist in Abhängigkeit von den Bedürfnissen des jeweiligen Saatguts gewählt.

## Beschreibung

Die Erfindung betrifft Saatgut mit einer Stickstoff-Dünger enthaltenden Umhüllung.

Der wichtigste Nährstoff für landwirtschaftliche Kulturen wie Zuckerrüben, Mais, Raps, Getreide und Gemüse wird mit den sogenannten Stickstoff-Düngern geliefert. Darunter werden in der Regel solche Düngemittel verstanden, die Stickstoff in einer in Wasser gut löslichen, schnell wirkenden und daher von den Pflanzen für den Stoffhaushalt gut verwertbaren Form enthalten. Dies gilt z. B. für anorganische Salze mit Ammonium- oder Nitratanteilen, aber auch für einige organische Verbindungen und hier insbesondere für den in Wasser ebenfalls leicht löslichen Harnstoff. Es werden überwiegend sogenannte Voll-Dünger mit Kalium und Phosphor (N-P-K), ergänzt mit Spurenelementen, eingesetzt.

In der traditionellen Landwirtschaft werden Stickstoff-Dünger in empfohlenen Mengen von z. B. 100 bis 120 kg N/ha, bei unterversorgten Böden aber auch bis 250 kg N/ha ausgebracht. Hierfür sind neben natürlichen Düngemitteln wie Gülle und Stallmist, die während der Vegetationsperiode durch Mikroorganismen mineralisiert werden, auch verschiedene Kunstdünger der oben genannten Art geeignet, die in Form von Granulaten oder sprühfähigen, in Wasser gelösten Düngemitteln vorliegen und wie die natürlichen Düngemittel meistens großflächig auf die Felder aufgebracht werden. Das hat zur Folge, daß der größte Teil der Stickstoff-Dünger nicht an die Pflanzensamen und Wurzeln gelangt, außerdem durch Regen leicht ausgewaschen wird und daher für den gewünschten Kreislauf nicht zur Verfügung steht. Aufgrund von Versuchen und Schätzungen kann davon ausgegangen werden, daß bisher höchstens 60 % derartiger Stickstoff-Dünger tatsächlich verwertet werden, während der Rest ungenutzt in die Gewässer gelangt und dadurch zu erheblichen Umweltproblemen führt. Diese Probleme lassen sich durch das Einbringen der Stickstoff-Dünger unmittelbar neben oder in den Saatgutreihen zwar geringfügig reduzieren, doch sind derartige Maßnahmen mit anderen Nachteilen wie z. B. Ziel- und Dosierungsungenauigkeiten verbunden.

Weiterhin ist es bereits bekannt (DE 21 35 410 A1), Saatgut durch Pillierung, Granulierung oder Inkrustierung mit einer nährstoffhaltigen Umhüllung zu versehen, die lösliche Alkali- und Erdalkaliverbindungen enthält. Diese bringen allerdings, wenn sie in den erforderlichen Mengen in die Umhüllung eingebracht werden, die Gefahr mit sich, daß sie das Wachstum behindern oder sogar eine Abtötung der Samen bzw. Pflanzen herbeiführen. Kalium und andere Nährstoffe, insbesondere Stickstoff-Salze, haben nämlich die Eigenschaft, daß sie zwar in Spuren wachstumsfördernd, in größeren Mengen jedoch keimtötend wirken. Werden daher größere, in der Umhüllung vorhandene Mengen derartiger Nährstoffe aufgrund ihrer hohen Löslichkeit sehr schnell freigesetzt, dann hat dies nicht die gewünschte Düngung, sondern ein frühzeitiges Absterben der Pflanzen zur Folge. Es ist daher nicht möglich, derartige Nährstoffe in den für eine Vegetationsperiode ausreichenden Mengen in die Umhüllungen einzubringen.

Daneben ist es auch bereits bekannt (DE 21 35 410 A1), die Umhüllungen mit chemischen Verbindungen in Form von kristallisierten, in Wasser schwerer löslichen Phosphaten (z. B. KMgPO₄) und deren Hydraten anzureichern, die dem Zweck dienen, die Wasseraktivität an den Samen klein zu halten, deren Lagerfähigkeit zu vergrößern und eine bessere Dosierung der den keimenden Pflanzen zugeführten Nährstoffe zu erreichen. Derartige Umhüllungen könnten im Prinzip auch mit Stickstoff in Form von ionisch aufgebauten Stickstoffsalzen angereichert werden, doch sind diese wegen ihrer 1000 ppm und mehr betragenden Wasserlöslichkeit als Behandlungsmittel praktisch ungeeignet. In den erforderlichen Mengen würden sie vielmehr wie die anderen anorganischen Salze die Keimung negativ beeinflussen und zumindest Keimverzögerungen, Keimeinbußen und Blattnekrosen verursachen.

Die durch anorganische Salze verursachten Schwierigkeiten könnten nach einem weiteren bekannten Vorschlag bis zu einem gewissen Grad durch Anwendung von Harnstoff vermieden werden (US-PS 60 40 673). Der Harnstoff soll dabei allerdings nur der Aktivierung und Stimulierung dienen, indem er trotz seiner kovalenten Bindungen in wässriger Lösung und mit Aufwandmengen von höchstens 16,5 g der Lösung entsprechend 2,2 g reinem Stickstoff pro Kilogramm Saatgut angewendet wird, was für die Keimlinge noch verträglich ist. Praktische Anwendungen von Harnstoff in Verbindung mit Saatgut-Umhüllungen sind bisher allerdings nicht bekannt geworden.

Schließlich sind organische Stickstoff-Lieferanten bekannt, die keine negativen Wirkungen auf das Keimverhalten haben und wegen der erforderlichen Umsetzungszeit den Stickstoff sehr langsam freisetzen, d. h. langsam wirkend sind. Als organischer Stickstoff-Lieferant könnte z. B. Hornmehl dienen, dessen Stickstoffanteil durch Mikroorganismen im Boden mineralisiert wird. Eine Anwendung derartiger Stoffe in Saatgut-Umhüllungen führt jedoch wegen des meistens nur kleinen Stickstoffgehalts (z. B. kleiner als 13 Gew. %) bei vorgegebenen Kaliberbegrenzungen zu Aussäproblemen. Ein weiteres Problem würde sich dadurch ergeben, daß die Anfangswirkung eines solchen Stickstoff-Düngers sehr mangelhaft wäre, d. h. ein zügiger Wachstumsstart, der die Basis für die weitere Pflanzenentwicklung ist, verhindert würde. Außerdem wären Umhüllungen mit so großen Massen und Schichtdicken erforderlich, daß der Gas- und Wasseraustausch der keimenden Samen mit der natürlichen Umgebung erschwert würde.

Eine zwangsweise Folge der zahlreichen Probleme, der sich bei der Anwendung von Stickstoff-Dünger enthaltenden Saatgut-Umhüllungen ergeben, ist die Tatsache, daß die Stickstoff-Düngung bisher ausschließlich in konventioneller Weise erfolgt und die dabei durch Überdüngung entstehenden Nachteile in Kauf genommen werden.

Demgegenüber liegt der Erfindung das technische Problem zugrunde, Saatgut derart mit einer Stickstoff-Dünger enthaltenden Umhüllung zu versehen, daß der Stickstoff gezielt am Saatgut dosiert, über die ganze Vegetationsperiode genutzt und durch Regenfälle od. dgl. nur in geringem Umfang ausgewaschen werden kann.

Zur Lösung dieses Problems dienen die kennzeichnenden Merkmale des Anspruchs 1.

Die Erfindung besteht im wesentlichen in einer Aufsplittung der Düngewirkungen unmittelbar am Saatgut mit Hilfe einer schnell wirkenden und einer langsam wirkenden Komponente unter Berücksichtigung der Bedürfnisse der jeweiligen Kultur. Darunter wird im Rahmen der vorliegenden Erfindung verstanden, daß es sich bei der "schnell" wirkenden Komponente z. B. um eine in Wasser gut lösliche Substanz handelt, die den in ihr befindlichen Stickstoff dem keimenden Samen bereits während der frühen Jugendentwicklung im Frühjahr und in einer keimfördernden Menge zur Verfügung stellt, während die "langsam" wirkende Komponente praktisch keinen Einfluß auf die Jugendentwicklung hat, auch durch schwere Regenfälle nur geringfügig ausgewaschen wird und erst in späteren Zeitabschnitten der Vegetationsperiode die erforderliche Düngung bewirkt, ohne dadurch keimschädigend zu wirken.

Ungeachtet dessen, daß Nährstoffe, die im Sinne der vorliegenden Erfindung schnell und langsam wirken, bereits an sich bekannt sind, besteht ein besonderer Vorteil der Erfindung darin, daß durch die Einbringung dieser Nährstoffe in die Saatgut-Umhüllung eine Konzentration beider Komponenten des Stickstoff-Düngers in der unmittelbaren Umgebung der Samen erzielt wird. Dadurch ist einerseits im Vergleich zur herkömmlichen Düngerausbringung eine erhebliche Einsparung an Düngemittel möglich. Andererseits können negative keimphysiologische Wirkungen wegen der exakten Dosierbarkeit insbesondere der leicht löslichen Komponente in der Umhüllung wirkungsvoll vermieden werden.

Weitere vorteilhafte Merkmale der Erfindung ergeben sich aus den Unteransprüchen.

Die Erfindung wird nachfolgend anhand eines bevorzugten Ausführungsbeispiels näher erläutert.

Die erfindungsgemäße Umhüllung enthält zwei Komponenten synthetischer Stickstoff-Dünger. Um eine wünschenswerte Anfangswirkung zu erzielen, wird eine erste, schnell wirkende Komponente verwendet, die vorzugsweise wenigstens eine in Wasser leicht lösliche Verbindung enthält. Die Gesamtmenge dieser Komponente in der Umhüllung, gemessen z. B. in Gramm Stickstoff pro Kilogramm Saatgut, wird dabei so bemessen, daß zwar der vergleichsweise geringe Stickstoffbedarf in den frühen Entwicklungsphasen des Saatguts sicher gedeckt wird, Keimschädigungen aber dennoch sicher vermieden werden. Dagegen wird eine zweite, langsam wirkende Komponente, die vorzugsweise wenigstens eine in Wasser schwer lösliche Verbindung enthält, der Umhüllung in einer solchen Menge zugesetzt, daß sie in dieser eine Depotwirkung hat, die Hauptmasse des Stickstoff-Düngers bildet und während des auf die Jugendentwicklung folgenden Teils der Vegetationsperiode wirksam wird. Das Gewichtsverhältnis der schnell wirkenden Komponente zur langsam wirkenden Komponente hängt bei Vermeidung von Keimschädigungen von den Bedürfnissen der jeweiligen Kultur ab, ist vorzugsweise kleiner als Eins und kann in Abhängigkeit von der gesamten N-Menge in der Umhüllung pro kg Saatgut und dem N-Gehalt der verwendeten Dünger z.B. 1:2 bis 1:28 und weniger bei Zuckerrüben betragen.

Die schnell wirkende Komponente besteht vorzugsweise aus einem anorganischen Salz mit Ionenbindung, kann aber auch aus einer ausreichend in Wasser löslichen organischen Substanz wie z. B. Harnstoff mit kovalenten Bindungen bestehen, selbst wenn hierbei die Löslichkeit nicht durch Dissoziation im Wasser erzielt wird.

Dagegen besteht die langsam wirkende Komponente vorzugsweise aus wenigstens einer organischen, in Wasser nur sehr schwer löslichen Substanz mit kovalenten Bindungen. Für diesen Zweck kommen solche organischen Stickstoffverbindungen infrage, bei denen der Stickstoff überwiegend durch mikrobiellen Abbau und über Ammonium zu Nitratverbindungen umgewandelt wird. Dabei werden solche Substanzen bevorzugt, deren Abbau mit der Temperatur zunimmt und damit in wärmeren Jahreszeiten entsprechend einem höheren Bedarf seitens der Pflanzen größer als in kälteren Perioden ist. Unterhalb von ca. 6 - 10 °C sollte bei diesen Substanzen dagegen praktisch keine Umsetzung durch Bodenbakterien od. dgl. mehr erfolgen, damit sie auch für die Saatgutbehandlung von überwinternden Kulturen wie z. B. Raps und Getreide geeignet sind. Dadurch wird der Vorteil erzielt, daß die Freisetzung der Nährstoffe erst dann erfolgt, wenn die Pflanzen unter den natürlichen Bedingungen aufhahmebereit für diese Nährstoffe sind. Dabei ist klar, daß es Verbindungen wie z. B. Harnstoff gibt, die teilweise über die Löslichkeit schnell und teilweise über den mikrobiellen Abbau langsam wirken.

Die Wasserlöslichkeit kann bei organischen Stickstoffverbindungen angenähert über das C:N-Verhältnis in einem Molekül gesteuert werden. Da für die Saatgutbehandlung aber hohe Stickstoffgehalte und insgesamt geringe Umhüllungsmassen erwünscht sind, sollte das C:N-Verhältnis nicht größer als 10 : 1 sein.

Als langsam wirkende Stickstoff-Dünger der beschriebenen Art eignen sich zahlreiche cyclische Verbindungen wie Pyrrole, Pyrilidine, Pyridine etc., acyclische Verbindungen wie Amine, Amide, Aminosäuren etc. sowie auch kovalente Stickstoff-Phosphor-Verbindungen, die alle in Wasser praktisch unlöslich sind und aus denen der Stickstoff erst freigesetzt wird, z. B. durch spezifische Mikroorganismen, wenn deren optimale Lebensbedingungen (z. B. höhere Boden-Temperatur und -Feuchte) auch für die zu keimenden Samen bzw. Pflanzen in der Natur erreicht werden. Vorteilhaft für die Stickstoff-Freisetzung sind dabei insbesondere Strukturelemente, in denen wenigstens ein Stickstoffatom einer funktionellen Gruppe wie z. B. der CO-Carbonylgruppe benachbart ist. Besondere Bevorzugung finden hier Harnstoff und seine Kondensationsprodukte mit Carbonsäuren oder Aldehyden wie z.B. mit Formaldehyd, Crotonaldehyd oder Isobutyraldehyd. Diese Stoffe erfüllen insbesondere die genannten Kriterien.

Ein Ausführungsbeispiel der Erfindung enthält eine Harnstoffmischung mit Harnstoff (Löslichkeit 1200 g/l Wasser bei 20 °C, C:N = 1 : 2 mit 48 % Stickstoffgehalt) als schnell wirkender Komponente und mit Isobutylidendiharnstoff (Löslichkeit < 2 g/l Wasser bei 20°, C:N = 3 : 1 mit 28 % Stickstoffgehalt) als langsam wirkender Komponente.

Die Herstellung der Umhüllung aus einer solchen Mischung beginnt mit ihrer Vermahlung auf eine Korngröße, die kleiner als 0,3 mm ist, um eine genaue Dosierung zu ermöglichen. Pro Kilogramm Saatgut werden in Abhängigkeit von der Samengröße und den Samenmengen pro Hektar einige Gramm bis Kilogramm an Stickstoff verwendet, wobei eine Genauigkeit von ±15 Gew. % an Stickstoff, bezogen auf den Sollwert beim einzelnen Saatgutkorn, eingehalten wird. Diese Qualitätseinforderungen werden z. B. mit Rotor/Stator-Geräten erfüllt, wie sie zur Herstellung von Pillierungen und Inkrustierungen allgemein bekannt sind.

Vorteile einer derartigen Herstellung der erfindungsgemäßen Umhüllung bestehen in einem schnellen und gleichmäßigen Aufwuchs von der Jugendentwicklung bis hin zur Ernte aufgrund der schnellen Wirkung des Harnstoffs und einem nachfolgenden gleichmäβigen Reihenschluß aufgrund der langsamen Wirkung des Isobutylidendiharnstoffs, insbesondere auch bei Kulturen wie z. B. Zuckerrüben und Mais mit großen Reihenabständen (z. B. 40 - 60 cm) und großen Saatgutabständen innerhalb jeder Reihe (z. B. 18 cm). Besonders vorteilhaft ist außerdem, daß die Pflanzenwurzeln aufgrund des schnellen Aufwuchses beim ersten Auftreten von Schädlingen oder Unkraut in frühen Abschnitten einer Vegetationsperiode (z. B. ab Mai) schon so stabil und widerstandsfähig sind, daß Schädlingsbefall und Unkrautbildung weniger kritisch als bei Anwendung bekannter Düngemethoden sind. Da außerdem der Wasserstrom zum Samen und nach der Keimung zu den Wurzeln hin gerichtet ist, wird die Gefahr der Nitratauswaschung auf ein Minimum reduziert.

Im übrigen ist klar, daß die Stickstoff-Düngung mit einer Phosphor/Kalium-Behandlung kombiniert werden kann, in dem der beschriebenen Umhüllung z. B. in Wasser schwer lösliche Phosphate zugegeben werden (DE 21 35 410 A1). Über ein passendes Mischungsverhältnis dieser Verbindungen mit den beiden Stickstoff-Varianten Harnstoff und Isobutylidendiharnstoff kann ein NPK-Verhältnis von 1 : 1 : 1 entsprechend den üblichen Empfehlungen erhalten werden. Außerdem können der Umhüllung in an sich bekannter Weise chelatisierte Spurenelemente beigegeben werden.

### Beispiel 1

Versuche auf Feldern wurden mit Zuckerrübensaatgut durchgeführt, das mit Nährstoffen umhüllt war. Als Stickstoff-Lieferant wurde eine Dünger-Mischung verwendet, die auf 100 g insgesamt 32 g Stickstoff enthält, wovon 28 g auf die Isobutylidendiharnstoffquelle und 4 g auf die Harnstoffquelle entfallen. Die Zuckerrüben wurden dann in bekannter Weise in einem Rotor/Stator-Granuliergerät mit der Mischung pilliert und zu diesem Zweck mit einer Zusammensetzung aus üblichen Hüllmassenkomponenten und Bindemitteln auf das vorgeschriebene Kaliber von 3,5 - 4,75 mm gebracht, wobei zusätzlich die vorgeschriebenen Insektizid- und Fungizidmengen auf die Umhüllung inkrustiert wurden.

Es wurden dann auf dem Feld bei betriebsüblicher Düngung die folgenden Varianten unter Praxisbedingungen geprüft:
Variante a.: 100 g der Mischung = 32 g N/E,
Variante b.: 200 g der Mischung = 64 g N/E und
Variante c.: 300 g der Mischung = 96 g N/E,
wobei 1 E = 100 000 Pillen eine für ca. 1 ha Rübenfläche ausreichende Pillenmenge ist. 10 bzw. 11,5 Wochen nach der Aussaat wurden folgende Rübengewichte erhalten:

| Auswertung in Wochen nach Aussaat | Feld 1 nach 10 Wochen | Feld 2 nach 11,5 Wochen |
|---|---|---|
| Kontrolle ohne N | 100 | 100 |
| a. 32 g N/E | 109 | 98 |
| b. 64 g N/E | 120 | 111 |
| c. 96 g N/E | 133 | 115 |

Dabei bedeutet die jeweils auf den Wert 100 normierte Kontrollmenge ohne N, daß hier Saatgut mit einer von Stickstoff-Dünger freien Umhüllung in einem Feldabschnitt beobachtet wurde, der mit der üblichen, für den Landwirt gewohnten und gegebenenfalls von landwirtschaftlichen Behörden empfohlenen Stickstoff-Grunddüngung (durchschnittlich ca. 120 kg N/ha) versehen war. Dagegen bedeuten die Werte von 32 g N/E, 64 g N/E und 96 g N/E, daß hier auf Feldabschnitten mit derselben Stickstoff-Grunddüngung Saatgut mit Umhüllungen aufgezogen wurde, das mit einer erfindungsgemäßen, Stickstoff-Dünger enthaltenden Umhüllung versehen war, die 32 g, 64 g bzw. 96 g der beschriebenen Harnstoff/Isobutylidendiharnstoff-Mischung auf 100 000 Pillen enthielt.

Die obige Tabelle zeigt, daß das Rübengewicht in beiden Feldern, ausgehend vom normierten Anfangswert 100, mit der zugegebenen Menge an Stickstoff-Dünger in der Umhüllung deutlich zunimmt.

Eine Überprüfung der Variante c. auf vier unterschiedlichen Feldern führte außerdem zu den folgenden durchschnittlichen, über je 200 Rüben gemittelten Rübengewichten in g pro Rübe:

| Auswertung in Wochen nach Aussaat | Feld 1 nach 9 Wochen | Feld 2 nach 10 Wochen | Feld 3 nach 11,5 Wochen | Feld 4 nach 14,4 Wochen |
|---|---|---|---|---|
| Kontrolle ohne Stickstoff | 106 | 114 | 131 | 206 |
| c. 96 N/E | 102 | 152 | 151 | 248 |

Die obige Tabelle macht deutlich, daß das Rübengewicht, ausgehend von nach 9 Wochen erreichten, bei herkömmlicher und erfindungsgemäßer Düngung etwa gleich großen Anfangswerten, bei dea mit der erfindungsgemäßen Umhüllung versehenen Zuckerrüben wesentlich stärker als bei üblicher Düngung zunimmt (nach 14,5 Wochen 248 g statt 206 g).

### Beispiel 2

Es wurden wiederum Versuche auf Feldern mit Zuckerrübensaatgut durchgeführt, das bis zur Grenze dessen, was bei Zuckerrüben aufgrund des vorgeschriebenen Kalibers von 3,5 mm bis 4,75 mm bisher möglich ist, mit einer Umhüllung versehen war. Die Saatgutumhüllung pro E bestand ausschließlich aus einer Düngermischung, die pro 100 g Dünger 28 g Stickstoff aus Isobutylidendiharnstoff und 1 g Stickstoff aus Harnstoff enthielt. Im Gegensatz zum Beispiel 1 wurde eine Stickstoffmenge von 710,5 g N/E verwendet.

Auf zwei Feldern mit betriebsüblicher Düngung wurden unter Praxisbedingungen Mitte Oktober die folgenden Ernteergebnisse erhalten:

| Erträge in Dezitonnen | Feld 1 | | Feld 2 | |
|---|---|---|---|---|
| | absolut | relativ | absolut | relativ |
| Kontrollsaatgut ohne N | 650 dt/ha | 100 | 540 dt/ha | 100 |
| Saatgut mit 710,5 g N/E | 682 dt/ha | 105 | 594 dt/ha | 110 |

Der analytisch bestimmte, mineralisierbare, pflanzenverfügbare Stickstoffgehalt des Bodens betrug bei der Aussaat 215 kg N/ha im Feld 1 und 126 kg N/ha im Feld 2. Obwohl somit Feld 1 sehr gut mit Stickstoff versorgt war und ein hoher Ertrag erzielt wurde, bewirkte der in der Saatgutumhüllung enthaltene Dünger von 710,5 g N/E eine zusätzliche Ertragssteigerung um ca. 5 %. Auf dem Feld 2 mit dem niedrigeren Ertrag wurde sogar eine zusätzliche Ertragssteigerung von ca. 10 % erzielt.

Außerdem zeigte sich, daß der Variationskoeffizent als Maß für die Streuung der Rübengewichte bei der Kontrollvariante deutlich größer als bei der Düngervariante war. Mit der Düngervariante läßt sich demnach ein gleichmäßigerer Aufwuchs erzielen.

Die Erfindung kann auch auf andere Kulturen wie z. B. Raps, Getreide, Mais und Gemüse angewendet werden, die im Vergleich zu Zuckerrüben u. U. andere Mengen an Stickstoff-Dünger in der Umhüllung erforderlich machen, um die gewünschten Anfangsbzw. Langzeitwirkungen zu erzielen. Dabei ist klar, daß die für Zuckerrüben angegebene Werte nur Beispiele sind, die je nach Löslichkeit und Abbaugeschwindigkeit der beteiligten Komponenten anders gewählt werden können. Möglich ist es natürlich auch, das erfindungsgemäße Saatgut ohne die anhand des Beispiels beschriebene Stickstoff-Grunddüngung zu verwenden, indem ein dieser entsprechendes Äquivalent an Stickstoff zusätzlich in die Umhüllung eingebracht wird. Auf diese Weise können zumindest diejenigen erheblichen Mengen an Kunstdünger, die bisher ungenutzt in das Grundwasser gelangen, stark vermindert werden. Dies wird nachfolgend am Beispiel 3 belegt.

### Beispiel 3

Es wurde Winterraps mit der Düngermischung pilliert, die wie im Beispiel 1 pro 100 g Dünger 28 g Stickstoff aus Isobutylidendiharnstoff und 4 g Stickstoff aus Harnstoff enthielt. Die mit der Saatgutumhüllung ausgebrachte Stickstoffmenge betrug ca. 2 kg N/ha. Die zusätzlich mit den vorgeschriebenen Fungizid- und Insektizidmengen behandelten Rapsdüngerpillen und ein keine Düngerumhüllung aufweisendes Kontrollsaatgut wurden im August auf einem Feld unter Praxisbedingungen ausgesät. Es wurden drei nebeneinander liegende Langparzellen I, II und III angelegt. Im Februar des darauf folgenden Jahres wurde die betriebsübliche Ergänzungsdüngung von Landwirt ausgestreut, und zwar in einer Menge von 45 kg N/ha in Parzelle I und von 90 kg N/ha in Parzellen II und III. Bei fast gleichem Pflanzenstand auf allen drei Parzellen wurde Ende des folgenden Juli mit folgendem Ergebnis gedroschen:

| Saatgut | Parzelle I | Parzelle II | Parzelle III |
|---|---|---|---|
| mit kg N/ha aus Saatgut | 2 kg | 2 kg | ohne |
| Ergänzungsdüngung mit kg N/ha großflächig | 45 kg | 90 kg | 90 kg |
| Ertrag Raps in dt pro ha (absolut) | 35,5 | 37,3 | 34,8 |
| Ertrag Raps pro ha (relativ) | 102 | 107 | 100 |

Der Versuch zeigt, daß mit einer stickstoffhaltigen Saatgutumhüllung bei nahezu gleichem Ertrag von 35,5 Dezitonnen gegen 34,8 Dezitonnen in Parzellen I und III erhebliche Mengen an Stickstoffdünger vom Landwirt eingespart werden können. Die Einsparung beträgt im Beispiel 43 kg N/ha oder ca. 48 %. Außerdem zeigen die Ergebnisse aus Parzellen I und III, daß 90 kg N/ha entsprechend 333 kg eines handelsüblichen 27%igen N-Düngers wie Kalkammonsalpeter mit Saatgut ohne Stickstoffumhüllung (Parzelle III) dieselben Erträge wie eine Stickstoffumhüllung von insgesamt 2 kg N/ha und eine Ergänzungsdüngung von nur 45 kg N/ha entsprechend ca. 166 kg Kalkammonsalpeter pro ha (Parzelle I) erbringen, so daß 2 kg N/ha in der Umhüllung einer Flächendüngung von 45 kg N/ha äquivalent sind.

Weiterhin ist festzustellen, daß bei Raps als überwinternde Kulturart, die mit der Umhüllung eingebrachte Menge an Stickstoffdünger von ca. 2 kg über die volle Vegetationszeit von 11 Monaten wirksam bleibt, was die oben angegebene Langzeitwirkung bestätigt. Schließlich ergibt sich aus den Ergebnissen in Parzellen II und III, daß bei derselben Ergänzungsdüngung die zusätzliche Anwendung der Stickstoffdüngerumhüllung eine Leistungssteigerung bringt, die hier ca. 7 % beträgt.

Die Erfindung ist nicht auf die beschriebenen Ausführungsbeispiele beschränkt, die auf vielfache Weise abgewandelt werden können. Insbesondere ist die Erfindung nicht auf die Anwendung von ausschließlich organischen Verbindungen beschränkt, sondern auch mit entsprechenden anorganischen Verbindungen realisierbar, z. B. wenn bei den erforderlichen Stickstoffmengen in der Umhüllung keine schädlichen Beeinträchtigungen des Gasaustauschs und der Wasserführung auftreten und keine negativen keimphysiologischen Wirkungen aufgrund zu großer oder zu schnell gelöster Stickstoffmengen zu befürchten sind. Außerdem ist zu beachten, daß die Größen (Durchmesser) der Umhüllungen gewissen Beschränkungen unterliegen, wenn die für derartiges Saatgut üblicherweise benutzten Sämaschinen auch weiterhin anwendbar sein sollen. Schließlich versteht sich, daß die verschiedenen Merkmale der Erfindung auch in anderen als den beschriebenen und dargestellten Kombinationen angewendet werden können.

## Patentansprüche

1. Saatgut mit einer Stickstoff-Dünger enthaltenden Umhüllung, **dadurch gekennzeichnet, daß** der Stickstoff-Dünger eine schnell wirkende, für die Jugendentwicklung des Saatguts bestimmte Komponente und eine langsam wirkende, zur Bildung eines Stickstoffdepots für die Zeit nach der Jugendentwicklung bestimmte Komponente enthält, wobei das Gewichtsverhältnis der beiden Komponenten in Abhängigkeit von den Bedürfnissen des Saatguts gewählt ist.

2. Saatgut nach Anspruch 1, **dadurch gekennzeichnet, daß** das Gewichtsverhältnis der schnell wirkenden Komponente zur langsam wirkenden Komponente kleiner als Eins ist.

3. Saatgut nach Anspruch 2, **dadurch gekennzeichnet, daß** das Gewichtsverhältnis der schnell wirkenden Komponente zur langsam wirkenden Komponente bei Zuckerrüben weniger als etwa 1 : 2 beträgt.

4. Saatgut nach einem der Ansprüche 1 bis 3, **dadurch gekennzeichnet, daß** die schnell wirkende Komponente wenigstens eine in Wasser leicht lösliche Verbindung enthält.

5. Saatgut nach einem der Ansprüche 1 bis 4, **dadurch gekennzeichnet, daß** die langsam wirkende Komponente wenigstens eine in Wasser schwer lösliche und überwiegend oder ausschließlich durch bakteriellen Abbau wirksame Verbindung enthält.

6. Saatgut nach einem der Ansprüche 1 bis 5, **dadurch gekennzeichnet, daß** der Stickstoff-Dünger eine organische Verbindung mit einem Strukturelement enthält, in dem wenigstens ein Stickstoffatom einer funktionellen Gruppe benachbart ist.

7. Saatgut nach Anspruch 6, **dadurch gekennzeichnet, daß** der Stickstoff-Dünger Harnstoff und seine Kondensationsprodukte mit Aldehyden enthält.

8. Saatgut nach Anspruch 7, **dadurch gekennzeichnet, daß** der Stickstoff-Dünger eine Mischung aus Harnstoff und Isobutylidendiharnstoff enthält.

9. Saatgut nach einem der Ansprüche 1 bis 8, **dadurch gekennzeichnet, daß** dem Stickstoff-Dünger Nährstoffsalze in Form von Alkali/Erdalkali-Salzen beigemischt sind.

10. Saatgut nach Anspruch 9, **dadurch gekennzeichnet, daß** die Salze aus Phosphaten bestehen.

11. Saatgut nach einem der Ansprüche 1 bis 10, **dadurch gekennzeichnet, daß** es in pillierter, granulierter oder inkrustierter Form vorliegt.
